# EUROPÄISCHE PATENTSCHRIFT

(11) **EP 4 071 007 B1**
(45) Veröffentlichungstag und Bekanntmachung des Hinweises auf die Patenterteilung: **14.06.2023**
(21) Anmeldenummer: 21167642.4
(22) Anmeldetag: 09.04.2021
(51) Int. Cl.: B60T 1/00, B60T 7/10, F16D 63/00

(54) **SPERRAKTOR, BREMSGETRIEBE MIT EINEM SOLCHEN SPERRAKTOR UND BETRIEBS- UND/ODER PARKBREMSE**
BLOCKING DEVICE, BRAKE GEAR WITH SUCH A BLOCKING DEVICE AND SERVICE AND/OR PARKING BRAKE
ACTUATEUR DE BLOCAGE, ORGANE DE FREIN DOTÉ D'UN TEL ACTUATEUR DE BLOCAGE ET FREIN DE SERVICE ET/OU DE STATIONNEMENT

(43) Veröffentlichungstag der Anmeldung: 12.10.2022
(73) Patentinhaber: IMS Gear SE & Co. KGaA, 78166 Donaueschingen (DE)
(72) Erfinder: Stöhr, Johannes, 78052 Villingen-Schwenningen (DE); Gruler, Fabian, 78554 Aixheim (DE); Synovzik, Wilfried, 78183 Hüfingen (DE)
(74) Vertreter: Westphal, Mussgnug & Partner Patentanwälte mbB

(56) Entgegenhaltungen:
- EP-A1- 3 333 463
- WO-A1-2016/174587
- DE-A1-102017 127 211
- DE-A1-102017 127 212
- DE-A1-102017 127 214

## Beschreibung

Die vorliegende Erfindung betrifft einen Sperraktor zum Feststellen eines Klinkenrades, ein Bremsengetriebe mit einem solchen Sperraktor sowie eine Betriebs- und/oder Parkbremse.

Sperraktoren sind aus dem Stand der Technik in unterschiedlichen Ausgestaltungen vorbekannt. Die aus dem Stand der Technik bekannten Sperraktoren dienen der mechanischen Verriegelung von Wellen oder Getriebeteilen und werden im Stand der Technik für eine Vielzahl von Anwendungen verwendet. Gattungsgemäße Sperraktoren werden beispielsweise verbreitet für elektronische Parkbremsen verwendet und kommen immer dann zum Einsatz, wenn über eine längere Zeit ein Fahrzeug mit angezogener Bremse abgestellt werden soll.

Derartige Parkbremsen sind auch als elektrische Parkbremsen (EPB) bekannt und umfassen typischerweise einen Bremssattel und einen Motor, wobei der Motor zum Anziehen der Bremse betätigt wird. Elektrische Parkbremsen kommen in Kraftfahrzeugen verbreitet zusammen mit herkömmlichen hydraulischen Betriebsbremsen in einem Bremssystem zur Anwendung.

EP 3 333 463 A1 offenbart einen elektrischen Parksperrenaktuator zur Betätigung einer Parksperre in einem Kraftfahrzeug mit einem Sperraktor für ein Getriebe für eine Parksperre, aufweisend eine Antriebseinrichtung, ein Gehäuse, ein Getriebe mit einer Drehachse und einem Abtrieb.

Um sicherzustellen, dass die Parkbremsen zu jeder Zeit das Kraftfahrzeug ausreichend bremsen, müssen insbesondere trockene Parkbremsen im stehenden Zustand des Fahrzeugs nachgezogen werden können, um auch im abgekühlten Zustand der beteiligten Bauteile eine ausreichend hohe Bremskraft zur Verfügung zu stellen, damit das Kraftfahrzeug an seiner Position verbleibt.

Derartige Bremssysteme haben sich in der Vergangenheit bewährt, allerdings hat es sich gezeigt, dass sich die verwendeten Sperraktoren einerseits als unzuverlässig und fehleranfällig erwiesen haben und andererseits hohe Reaktionszeiten aufweisen, wodurch insbesondere das Öffnen der Parkbremse zum Fortsetzen der Fahrt verzögert erfolgt.

Darüber hinaus besteht der Wunsch seitens der Automobilindustrie "trockene" elektrische Betriebsbremsen bei Kraftfahrzeugen zu verwenden, um einerseits Gewichtsersparnisse zu erreichen und um andererseits die Komplexität der Bremssysteme zu reduzieren.

Hier setzt die vorliegende Erfindung an.

Die vorliegende Erfindung widmet sich der Aufgabe, einen Sperraktor, insbesondere einen Sperraktor für ein Bremsengetriebe einer elektrischen Betriebsbremse bereitzustellen, der in zweckmäßiger Weise die aus dem Stand der Technik bekannten Nachteile beseitigt. Der Sperraktor soll ein schnelles Wechseln zwischen den Betriebsmodi einer Betriebsbremse zwischen Fahrbetrieb und Parkbetrieb ermöglichen und andererseits zuverlässig im Parkbetrieb das Bremsengetriebe der Bremse sperren können.

Diese Aufgaben werden durch einen Sperraktor mit den Merkmalen des Patentanspruchs 1, ein Bremsengetriebe mit den Merkmalen des Patentanspruchs 18 sowie eine Betriebsbremse eines Kraftfahrzeugs mit den Merkmalen des Patentanspruchs 19 gelöst.

Weitere vorteilhafte Ausgestaltungen der vorliegenden Erfindung werden in den Unteransprüchen angegeben.

Der erfindungsgemäße Sperraktor mit den Merkmalen des Patentanspruchs 1 weist eine Antriebseinrichtung, ein Gehäuse, ein von der Antriebseinrichtung angetriebenes Getriebe mit einem Abtrieb auf. Darüber hinaus weist der Sperraktor einen Klinkenschlitten auf, der in einer Achse zwischen einer ersten Stellung und einer zweiten Stellung entlang eines Sperrwegs beweglich ist. Erfindungsgemäß ist vorgesehen, dass der Abtrieb über einen Exzenter mit dem Klinkenschlitten derart gekoppelt ist, dass bei einer Drehung des Abtriebes der Klinkenschlitten in der Achse bewegt werden kann.

Die vorliegende Erfindung beruht auf der Idee, einen kompakten Sperraktor bereitzustellen, der zum Betätigen des Klinkenschlittens ein Getriebe verwendet. Das Getriebe wird antriebsseitig durch die Antriebseinrichtung angetrieben und abtriebsseitig steht das Getriebe in Wirkverbindung über den Abtrieb mittels des Exzenters mit dem Klinkenschlitten, wodurch der Klinkenschlitten in der Achse bewegt werden kann. Der Exzenter ist exzentrisch zu der Drehachse des Getriebes an dem Träger angeordnet, wobei an dieser Stelle bereits angemerkt wird, dass der Exzenter an dem Abtrieb befestigt werden kann, oder integral mit dem Abtrieb ausgebildet sein kann.

Der Klinkenschlitten gemäß der vorliegenden Erfindung kann als Sperrglied oder Sperrklinke wirken oder ein Sperrglied oder eine Sperrklinke umfassen und ist konfiguriert, mit einem später noch im Detail beschriebenen Klinkenrad zusammenzuwirken. Die erste Stellung des Klinkenschlittens kann dem freigegebenen Zustand des Klinkenrads entsprechen, wobei der Klinkenschlitten nicht in das Klinkenrad bzw. dessen Verzahnung eintaucht bzw. eingreift und dieses in beide Drehrichtungen frei beweglich ist.

Die zweite Stellung des Klinkenschlittens kann dem gesperrten Zustand des Klinkenrads entsprechen, wobei das Klinkenrad bevorzugt in eine der zwei Drehrichtungen gesperrt ist, und in die andere der zwei Drehrichtungen einen Freilauf aufweist. In dieser zweiten Stellung kann der Klinkenschlitten in das Klinkenrad bzw. in dessen Verzahnung hineinragen und dieses in mindestens eine der zwei Drehrichtungen blockieren.

Eine vorteilhafte Weiterbildung der vorliegenden Erfindung sieht vor, dass der Exzenter in eine Führungsausnehmung des Klinkenschlittens greift. Der Exzenter steht somit zumindest in eine der kartesischen Raumrichtungen mit der Führungsausnehmung in Wirkkontakt, wobei die Führungsausnehmung eine Auslenkung des Exzenters in einer - bevorzugt einer einzigen - Richtung quer zur Achse ermöglicht.

Eine weitere vorteilhafte Ausgestaltung der vorliegenden Erfindung sieht vor, dass der Exzenter in einer Ebene quer zur Drehachse innerhalb Führungsausnehmung beweglich gehalten ist. Demnach ist die Führungsausnehmung sowohl in Richtung der Achse als auch quer zu der Achse derart bemessen, dass der Exzenter innerhalb der Führungsausnehmung beweglich ist. Insbesondere ist es vorteilhaft, wenn der Exzenter lediglich mit einer Kontaktfläche der Führungsausnehmung in Wirkkontakt kommen kann, wobei noch weiter bevorzugt die Kontaktfläche der Führungsausnehmung auf einer von der Sperrklinke abgewandten Seite angeordnet ist.

Die Führungsausnehmung soll eine Ausweichbewegung des Klinkenschlittens ermöglichen, die einen Freilauf des Klinkenrades erlaubt.

Das Klinkenrad kann hierzu bevorzugter Weise eine Verzahnung mit flachen und steilen Flanken aufweisen, wobei der Klinkenschlitten über die flache Flanke unter Vornahme der Ausweichbewegung hinweg gleiten kann, währenddessen bei einer Drehung in die entgegengesetzte Richtung der Klinkenschlitten gegen die steile Flanke stößt, mit dieser einen Formschluss bildet und die Drehung blockiert.

Eine Weiterbildung der vorliegenden Erfindung sieht vor, dass die Führungsausnehmung in der Achse derart bemessen ist, dass eine Verschiebung des Exzenters innerhalb der Führungsausnehmung und innerhalb der Größenordnung des Sperrweges möglich ist. Unter der Bemessung innerhalb der Größenordnung des Sperrweges ist ein Maß zu verstehen, welches bevorzugter Weise der Zahnhöhe des Klinkenrades entspricht und kleiner oder gleich dem Sperrweg ist. Das Maß kann vorzugsweise ca. 75-100% des Sperrweges betragen. Die Führungsausnehmung ermöglicht die Ausweichbewegung des Klinkenschlittens, um einen Freilauf des Klinkenrades zu ermöglichen.

Gemäß einer weiteren vorteilhaften Ausgestaltung der vorliegenden Erfindung weist die Führungsausnehmung des Klinkenschlittens eine Kulisse auf, die mit dem Exzenter zusammenwirkt. Die Kulisse bildet die Kontaktfläche der Führungsausnehmung. Bei einer Drehung des Exzenters wälzt der Exzenter an der Kulisse, wobei die Kulisse eine nichtlineare Form, vorzugsweise eine Wellenform, aufweist, wodurch die Verschiebung des Klinkenschlittens zusätzlich zu der Drehbewegung des Exzenters von der Ausgestaltung der Form der Kulisse abhängig ist.

Nach Maßgabe einer bevorzugten Ausgestaltung der vorliegenden Erfindung umfasst die Kulisse der Führungsausnehmung einen Vorsprung, durch den der Klinkenschlitten entlang des Sperrweges zwischen der ersten Stellung und der zweiten Stellung zunächst in die entgegengesetzte Richtung bewegt wird. Bevorzugt ist weiterhin vorgesehen, dass die Kulisse neben dem Vorsprung einen Endlagenabschnitt aufweist. Gegen erhöhten Widerstand kann der Exzenter über den Vorsprung geschoben werden, wodurch ein Feststellmittel gebildet ist, welches verhindert, dass der Exzenter ungewollt die erste Endlage und/oder die zweite Endlage verlässt.

Weiterhin hat es sich als vorteilhaft erwiesen, wenn der Klinkenschlitten in die erste Stellung oder die zweite Stellung durch Federmittel vorgespannt ist. Bevorzugt spannen die Federmittel den Klinkenschlitten in die zweite, also sperrende, Stellung vor. Bevorzugt bestimmt der Exzenter die maximale Auslenkung des Klinkenschlittens in Richtung der zweiten Stellung und das Federmittel wirkt in die von dem Exzenter entgegengesetzte Richtung.

Es hat sich als vorteilhaft erwiesen, wenn das Getriebe ein Planetengetriebe und/oder ein Zykloidengetriebe umfasst.

Bevorzugt umfasst das Planetengetriebe und/oder das Zykloidengetriebe ein Hohlrad, wobei das Hohlrad bevorzugt eine Innenverzahnung aufweist.

Darüber hinaus hat es sich als vorteilhaft erwiesen, wenn das Getriebe ein Antriebsrad und mindestens ein Umlaufrad aufweist, dass über einen um die Drehachse drehbaren Träger mit dem Abtrieb gekoppelt ist. Das Antriebsrad wird bevorzugt von der Antriebseinrichtung angetrieben und steht in Wirkkontakt mit dem mindestens einen Umlaufrad, wobei das Umlaufrad wiederum mit dem Hohlrad in Wirkverbindung steht.

Das Umlaufrad des Zykloidengetriebes wird durch das Antriebsrad mittels eines Exzenters angetrieben und rollt an dem Hohlrad in einer Orbitalbewegung um die Drehachse ab. Eine Übertragung der Dreh- bzw. Orbitalbewegung des Umlaufrades auf den Abtrieb erfolgt über einen Träger, der einen oder mehrere Pins aufweist, die in Ausnehmungen des Umlaufrades in bekannter Weise greifen.

Das Planetengetriebe weist vorzugsweise mehrere Umlaufräder, auch Planetenräder genannt, auf, die an einem gemeinsamen Planetenträger drehbar angeordnet sind. Der Planetenträger ist um die Drehachse drehbar und bildet den Abtrieb.

Nach Maßgabe einer Weiterbildung der vorliegenden Erfindung ist das Hohlrad in dem Gehäuse feststehend angeordnet und die Antriebseinrichtung treibt das Antriebsrad des Planetengetriebes oder des Zykloidengetriebes an. Sowohl das Antriebsrad und/oder das Hohlrad können bzw. kann vorzugsweise koaxial zu der Drehachse angeordnet sein und das mindestens eine Umlaufrad dreht sich zusammen mit dem Träger um die Drehachse. Die Drehung des Trägers entspricht dem Abtrieb des Planetengetriebes und gibt die Bewegung des Exzenters in einer Umlaufbahn um die Drehachse vor.

Nach Maßgabe einer Weiterbildung der vorliegenden Erfindung wird der Klinkenschlitten durch eine Führung in der Achse senkrecht zu der Drehachse beweglich gehalten. Die Führung bildet eine Zwangsführung des Klinkenschlittens und ist konfiguriert, Kräfte quer zu der Achse aufzunehmen, welche beispielsweise beim Sperren des Klinkenrads resultieren können.

Bevorzugt ist die Führung des Klinkenschlittens eine Ausnehmung in dem Gehäuse, wobei ferner gemäß einer Weiterbildung ein zweites Gehäuseteil vorgesehen sein kann, welches den Klinkenschlitten in der Ausnehmung des Gehäuses formschlüssig hält. Weiterhin ist es vorteilhaft, wenn das zweite Gehäuseteil eine Lagerung für den Träger ausbildet. Es können weitere Gehäuseteile vorgesehen sein, die beispielsweise die Antriebseinrichtung und/oder auch Gehäuseteile ganz oder teilweise mit aufnehmen.

Eine Weiterbildung der vorliegenden Erfindung sieht mindestens einen Endanschlag vor, durch den eine Drehung des Trägers um die Drehachse beschränkt ist. Bevorzugt beschränken zwei Endanschläge eine Drehung des Trägers um ca. 180°. Die Endanschläge geben die Lage des Exzenters in einer Endlage vor und geben die Stellung des Klinkenschlittens vor.

Eine Weiterbildung der vorliegenden Erfindung sieht vor, dass mindestens ein Sensor vorgesehen ist, der die Stellung des Klinkenschlittens, des Trägers und/oder des Exzenters erfassen kann. Der Sensor kann somit eindeutig den Zustand des Sperraktors erfassen.

Die Antriebseinrichtung kann einen DC-Motor umfassen. Der DC-Motor kann von einer Gleichspannungsquelle, insbesondere einem Stromspeicher eines Kraftfahrzeuges, mit Spannung versorgt werden.

Ein weiterer Aspekt der vorliegenden Erfindung betrifft ein Bremsengetriebe mit einem zuvor beschriebenen Sperraktor und einem drehbaren Klinkenrad.

Bevorzugt ist das Klinkenrad in einer Getriebeachse drehbar angeordnet, wobei die Getriebeachse noch weiter bevorzugt parallel zu der Drehachse des Getriebes des Sperraktors ist.

Weiterhin ist es vorteilhaft, wenn das Gehäuse des Sperraktors ebenfalls ein Getriebegehäuse des Bremsengetriebes bildet.

Auch hat es sich als vorteilhaft erwiesen, wenn das Klinkenrad eine Mehrzahl von Zähnen aufweist, wobei der jeweilige Zahn aus einer flachen Flanke und einer steilen Flanken gebildet ist.

Ein weiterer Aspekt der vorliegenden Erfindung betrifft eine Bremse, insbesondere eine elektrische Betriebs- und/oder Parkbremse mit einem zuvor beschriebenen Getriebe.

Nachfolgend werden unter Bezugnahme auf die begleitende Zeichnungen zwei Ausführungsbeispiele im Detail beschrieben. Es zeigen:
- Figur 1: eine Explosionsdarstellung eines Sperraktors mit einer Antriebseinrichtung, einem Gehäuse, einem als Planetengetriebe ausgestalteten Getriebe und einem Klinkenschlitten, der zwischen einer ersten Position und einer zweiten Position beweglich ist,
- Figur 2: den Sperraktor gemäß Figur 1 mit einem Klinkenrad eines Bremsengetriebes, wobei der Klinkenschlitten in der ersten Stellung ist und das Klinkenrad in beide Drehrichtungen frei beweglich ist,
- Figur 3: eine perspektivische Darstellung des Sperraktors gemäß Figur 2,
- Figur 4: den Sperraktor gemäß den Figuren 1-3, wobei der Klinkenschlitten in der zweiten Stellung ist und das Klinkenrad in beide Drehrichtungen frei beweglich ist,
- Figur 5: eine perspektivische Darstellung des Sperraktors gemäß Figur 4,
- Figur 6: den Sperraktor gemäß den Figuren 1-5, wobei der Klinkenschlitten auf einen Zahn des Klinkenrades trifft,
- Figur 7: eine vergrößerte Detaildarstellung einer Kulisse des Klinkenschlittens,
- Figur 8: eine Explosionsdarstellung eines Sperraktors gemäß einem zweiten Ausführungsbeispiel mit einem als Zykloidengetriebe ausgestalteten Getriebe, und
- Figur 9: eine vergrößerte Detaildarstellung des Sperraktors gemäß Figur 8.

Nachfolgend werden gleiche oder funktional gleiche Bauteile mit gleichen Bezugszeichen gekennzeichnet. Der Übersichtlichkeit halber sind in den einzelnen Figuren nicht alle gleichen oder funktional gleichen Teile mit einer Bezugsziffer versehen.

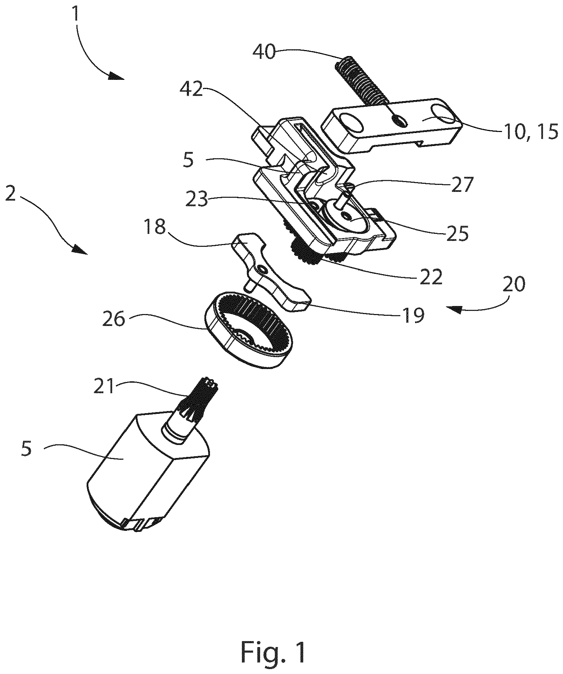

Figur 1 ist eine perspektivische Explosionsdarstellung eines Sperraktors 2 eines Bremsengetriebes 1 einer elektrischen Betriebsbremse gemäß eines ersten Ausführungsbeispiels zu entnehmen, der eine Antriebseinrichtung 5, ein Gehäuse 10, ein Getriebe 20 und einen Klinkenschlitten 30 umfasst.

Die Antriebseinrichtung 5 kann ein DC-Motor sein und ist trieblich mit dem Planetengetriebe 20 verbunden.

Das Gehäuse 10 kann aus mehreren Gehäuseteilen 14, 14', 15 und 15' gebildet werden, wobei bevorzugt die Gehäuseteile 14, 14', 15 und 15' aus einem Kunststoff, vorzugsweise durch Spritzgießen, hergestellt sind. Zur Veranschaulichung ist in den Figu-ren 1 bis 7 lediglich ein zweites Gehäuseteil 15 dargestellt.

Das Gehäuse 10 kann weiterhin ebenfalls die Komponenten des (nicht vollständig dargestellten) Bremsengetriebes 1, z.B. ein Klinkenrad 50, einhausen. Die Gehäuseteile 14, 15 können beispielsweise durch eine Schraubverbindung miteinander verbunden werden. Die Gehäuseteile 14` und 15' dienen als Gehäusedeckel.

Das Getriebe 20 kann gemäß dieses Ausführungsbeispiels ein Planetengetriebe sein, das einen Abtrieb antreibt. Das Planetengetriebe weist eine Drehachse R, ein Antriebsrad 21, drei Umlaufräder 22, die drehbar an einem Träger 23 gehalten sind und ein Hohlrad 26 auf, wobei der Träger 23 bzw. der Planetenträger mit dem Abtrieb verbunden ist. Das Antriebsrad 21 kann das Sonnenrad bilden und die Umlaufräder 22 bilden die Planeten, die durch den Planetenträger drehbar gehalten sind. Die Drehachse R wird durch das Antriebsrad 21 vorgegeben, wobei das Antriebsrad 21 und das Hohlrad 26 konzentrisch angeordnet sind. Der Träger 23 ist über eine Welle 27 drehbar an dem Gehäuse 10, bevorzugt an dem zweiten Gehäuseteil 15, abgestützt, wobei der Träger 23 bzw. die Welle 27 ebenfalls in der Drehachse R drehbar ist. Das jeweilige Umlaufrad 22 steht sowohl mit dem Hohlrad 26 als auch mit dem Antriebsrad 21 in Eingriff. Der Träger 23 und die Welle 27 können den Abtrieb bilden.

Das Antriebsrad 21 wird von der Antriebseinrichtung 5 angetrieben.

Wie insbesondere der Explosionsdarstellung gemäß Figur 1 zu entnehmen ist, ist auf dem Träger 23 ein Exzenter 25 angeordnet, der exzentrisch zu der Drehachse R bevorzugt auf der von den Umlaufrädern 22 abgewandten Seite des Träger 23 angeordnet ist.

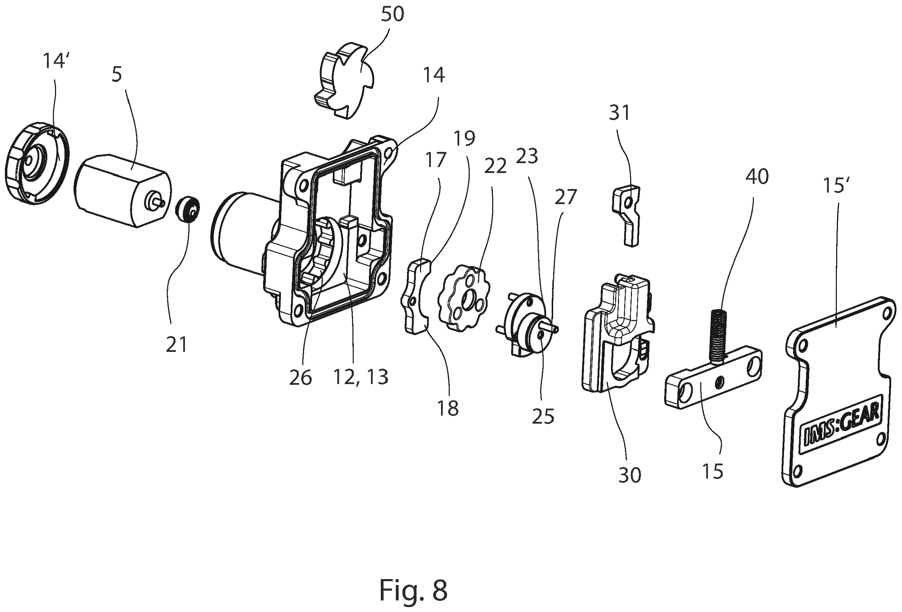

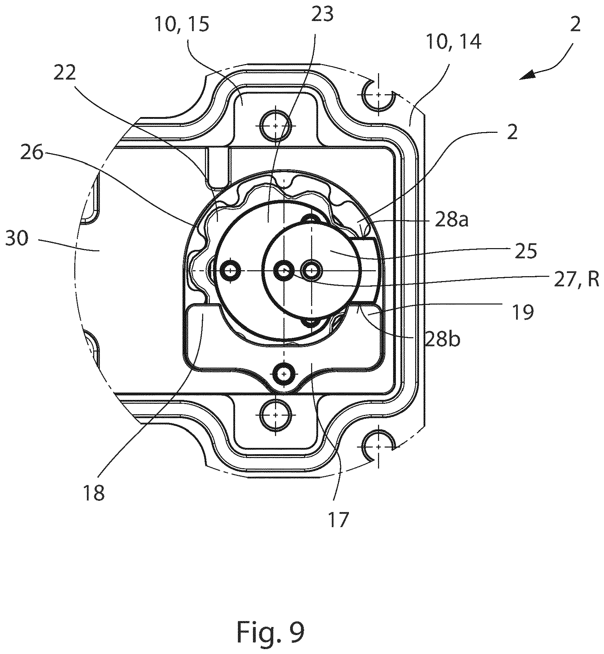

Weiterhin kann den Figuren 8 und 9 entnommen werden, dass der Träger 23 keine rotationssymmetrische Form aufweist, sondern birnenförmig mit einem ovalförmigen Bauchabschnitt und einem quaderähnlichen Halsabschnitt ausgebildet ist. Der Halsabschnitt bildet in beide Umlaufrichtungen um die Drehachse R eine Anschlagsfläche 28a, 28b aus. Es hat sich als vorteilhaft erwiesen, wenn die Anschlagflächen 28a, 28b V-förmig ausgebildet sind.

Der Exzenter 25 bzw. der Träger 23 kann zwischen zwei Endlagen um ca. 180° hin und her verdreht werden, wobei in den Endlagen Anschlagsflächen 28a, 28b mit an dem Gehäuse 10 angeordneten Endanschlägen 18, 19 zusammenwirken. Die Figuren, in denen der Exzenter sich in der ersten Endlage befindet, sind mit "A" und die Figuren, in denen der Exzenter 25 sich in der zweiten Endlage befindet, sind mit "B" gekennzeichnet.

Die Endanschläge 18, 19 - wie detailliert in Figur 9 gezeigt ist - können auf einem Anschlagselement 17 ausgebildet sein, welches V-förmig ist und über einen Bolzen mittig zwischen den zwei Endanschläge 18, 19 an dem Gehäuse 10 abgestützt ist.

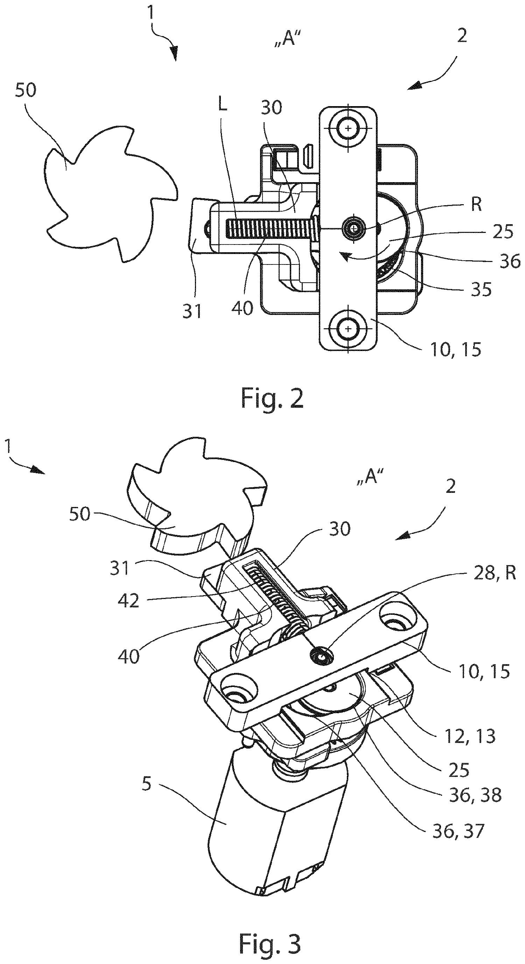

Der Klinkenschlitten 30 umfasst eine Sperrklinke 31 und ist entlang einer Achse L beweglich, wobei die Achse L quer zur Drehachse R angeordnet ist. Der Klinkenschlitten 30 ist entlang eines Sperrweges zwischen einer ersten Stellung und einer zweiten Stellung in der Achse L beweglich, wobei die erste Stellung die Sperrklinke 31 - wie in den Figuren 2 und 3 gezeigt - aus dem Klinkenrad 50 herausgezogen ist, und in der zweiten Stellung in das Klinkenrad 50 eingreifen kann.

Der Klinkenschlitten 30 kann näherungsweise eine rechteckige Form aufweisen und weist ferner einen ersten Endbereich und einen zweiten Endbereich auf, wobei der erste Endbereich auf der von dem Klinkenrad 50 abgewandten Seite angeordnet ist, der zweite Endbereich auf der dem Klinkenrad 50 zugewandten Seite und in dem zweiten Endbereich die Sperrklinke 31 angeordnet ist.

Das Gehäuse 10 kann - wie in Figur 3 angedeutet - eine Führung 12 aufweisen, durch die der Klinkenschlitten 30 in der Achse L beweglich gehalten ist. Bevorzugt bildet die Führung 12 einen Formschluss, in dem der Klinkenschlitten 30 verliersicher gehalten ist und etwaige Querkräfte aufnehmen kann.

Über Federmittel 40 ist der Klinkenschlitten 30 an dem Gehäuse 10 bzw. dem zweiten Gehäuseteil 15 vorgespannt abgestützt, wobei die Federmittel 40 einerseits an einem Federschuh 42 in dem Klinkenschlitten 30 abgestützt sind und andererseits an dem Gehäuse 10 bzw. dem zweiten Gehäuseteil 15. Die Federmittel 40 spannen den Klinkenschlitten 30 in der Achse L in Richtung der zweiten Stellung bzw. in Richtung des Klinkenrades 50 vor.

Unter Bezugnahme auf Figur 2 ist zu erkennen, dass der Klinkenschlitten 30 eine Führungsausnehmung 35 aufweist. Die Führungsausnehmung 35 bildet eine Kontaktfläche, auf der der Exzenter 25 bei einer Umlaufbewegung um die Drehachse R abwälzen kann. In der Führungsausnehmung 35 ist eine Kulisse 36 angeordnet bzw. mit anderen Worten die Kontaktfläche ist als Kulisse 36 für den Exzenter 25 ausgebildet. Die Führungsausnehmung 35 kann größer bemessen sein als der Exzenter 25, weshalb der Exzenter 25 in der Führungsausnehmung 35 und innerhalb der Führungsausnehmung 35 beweglich angeordnet ist. Bevorzugt ist die Führungsausnehmung 35 derart bemessen, dass der Exzenter 25 im Bereich der Größenordnung des Sperrweges innerhalb der Ausnehmung in der Achse L beweglich ist.

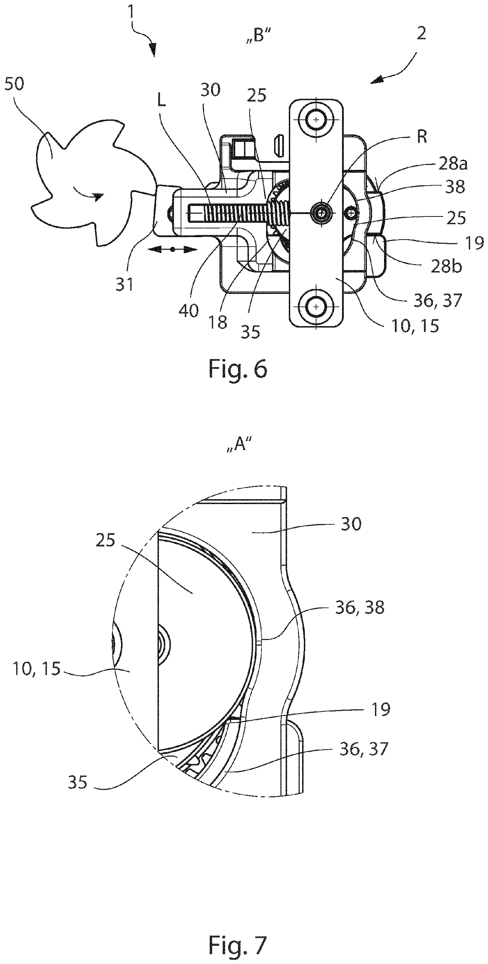

Federmittel 40 spannen die Kulisse 36 gegen den Exzenter 25, wobei der Exzenter 25 die Auslenkung des Klinkenschlittens 30 in Richtung der zweiten Position bzw. des Klinkenrads 50 vorgibt. Der Exzenter 25 gleitet mit seiner Mantelfläche entlang der Kulisse 36, wobei die Kulisse 36 einen Vorsprung 37 aufweist, der insbesondere in den Figuren 6 und 7 im Detail dargestellt ist.

Der Vorsprung 37 ist auf der dem ersten Endbereich zugewandten Seite des Klinkenschlittens 30 in der Führungsausnehmung 35 angeordnet und ragt in die Führungsausnehmung 35 in der Achse L. Neben dem Vorsprung ist ein Endlagenabschnitt 38 der Kulisse 36 vorgesehen, in den der Exzenter 25 in einer der Endlagen eintaucht.

Der Vorsprung 37 verhindert ein ungewünschtes Verdrehen des Exzenters 25 in der ersten Endlage "A" und/oder der zweiten Endlage "B", indem zunächst der Exzenter 25 entgegen der Federkraft des Federmittels 40 den Klinkenschlitten 30 verschieben muss. Diese Verschiebung kann zunächst in die entgegensetzte Richtung erfolgen. Dadurch kann auf zusätzliche Feststellmittel verzichtet werden.

In den Figuren 2, 3 und 7 befindet sich der Exzenter 25 in der ersten Endlage "A" und hält den Klinkenschlitten 30 in einer das Klinkenrad 50 freigebenden Stellung. In dieser ersten Stellung kann das Klinkenrad 50 in beide Drehrichtungen frei gedreht werden. In der ersten Endlage "A" befindet sich (nicht dargestellt) die Anschlagsfläche 28a in Wirkkontakt mit dem ersten Endanschlag 18 und der Exzenter 25 ist in Wirkkontakt mit dem Endlagenabschnitt 38 der Kulisse 36.

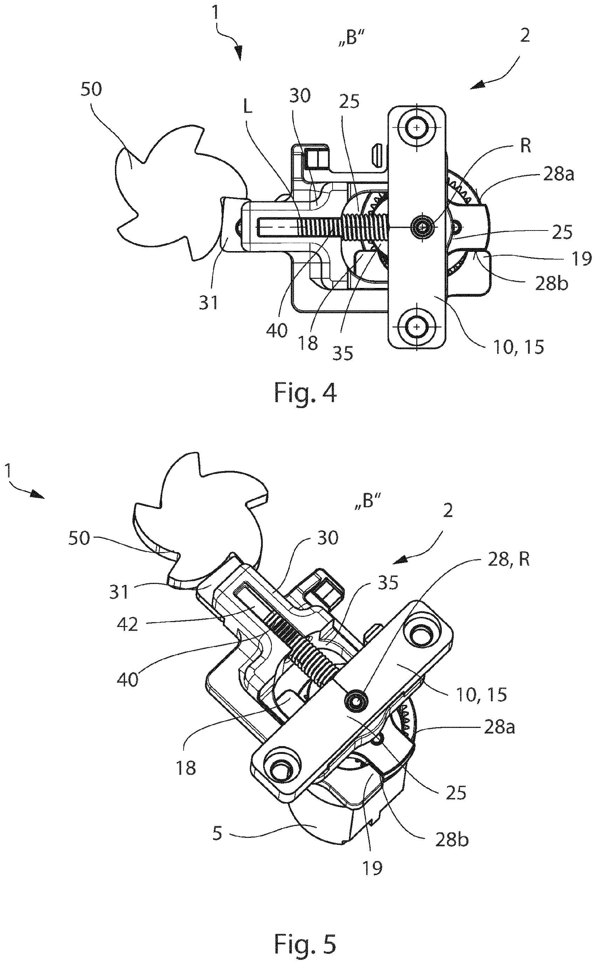

Zum Sperren des Bremsengetriebes 1 wird die Antriebseinrichtung 5 angesteuert und der Exzenter 25 um 180° gemäß der in Figur 2 gezeigten Pfeillinie im Uhrzeigersinn gedreht. Dabei schiebt sich der Exzenter 25 entlang der Kulisse 36 über den Vorsprung 37, wodurch zunächst der Klinkenschlitten 30 in der Achse L von dem Klinkenrad 50 weggeführt wird und erst anschließend infolge einer weiteren Drehung des Exzenters 25 in Richtung des Klinkenrades 50 durch die Federkraft der Federmittel 40 verschoben wird, bis der Exzenter 25 die zweite Endlage "B" gemäß den Figuren 4, 5 und 6 erreicht hat.

In der zweiten Endlage "B" kommt die Anschlagsfläche 28b in Wirkkontakt mit dem zweiten Anschlag 19 und der Exzenter 25 taucht bzw. rastet in den Endlagenabschnitt 38 der Kulisse 36 ein. Durch das Einrasten bei der Verwendung des Sperraktors 2 für ein Bremsengetriebe einer Park- und/oder Betriebsbremse kann der Sperraktor 2 in der zweiten Stellung die Parkposition sicher auch gegen ungewollte Vibrationen halten.

In der zweiten Endlage "B" ist das Klinkenrad 50 - wie in Figur 6 mittels einer Pfeillinie angedeutet - gesperrt und kann lediglich eine Drehung in eine der zwei Drehrichtungen vornehmen. Bei einem Bremsengetriebe 1 einer Park- und/oder Betriebsbremse entspricht dies der Parkposition. Der Klinkenschlitten 30 sperrt das Klinkenrad 50 in eine Drehrichtung und erlaubt einen Freilauf in die entgegengesetzte Drehrichtung. Dabei kann der Klinkenschlitten 30 bzw. die Sperrklinke 31 entgegen der Federkraft des Federmittels 40 eine Ausweichbewegung vornehmen. Die Park- und/oder Betriebsbremse kann somit nachgezogen werden.

Zum Freigeben des Bremsengetriebes 1 bzw. des Klinkenrads 50 wird die Antriebseinrichtung 5 angesteuert und der Exzenter 25 um 180° entgegen der in Figur 2 gezeigten Pfeillinie gedreht, bis die Anschlagsfläche 28a in Wirkkontakt mit dem ersten Anschlag 18 kommt und der Exzenter 25 in den Endlagenabschnitt 38 der Kulisse 36 wieder eintaucht. Das Erreichen der ersten Endlage "A" und/oder das Erreichen der zweiten Endlage "B" kann durch einen Sensor erfasst werden.

Es kann beim Sperren des Klinkenrades in Ausnahmefällen dazu kommen, dass der Klinkenschlitten 30 auf einen Zahn des Klinkenrades fährt, wie beispielsweise in Figur 6 dargestellt.

Der Klinkenschlitten 30 bzw. die Sperrklinke 31 werden auf einen vorstehenden Zahn des Klinkenrades 50 bewegt und können dieses nicht verriegeln. Ein Sensor des Bremsengetriebes 1 kann die Position oder den Eingriff des Klinkenschlittens 30 bzw. der Sperrklinke 31 ermitteln und das Klinkenrad 50 durch einen Bremsmotor weiterdrehen, so dass die Sperrklinke 31 in das Klinkenrad 50 einrasten kann.

Ein zweites Ausführungsbeispiel kann Figur 8 entnommen werden, welches bis auf die Ausgestaltung des Getriebes 20 gleich ausgebildet ist.

Das Getriebe 20 ist gemäß dem zweiten Ausführungsbeispiel als ein Zykloidengetriebe ausgebildet. Das Antriebsrad 21 umfasst einen Exzenter 21a, der mit dem Umlaufrad 22 in Wirkkontakt steht. Das Umlaufrad 22 kann entlang einer Umlaufbahn in dem Hohlrad 26 abrollen, wobei korrespondiere Verzahnungen des Hohlrades 26 und des Umlaufrades ineinandergreifen.

Um die Drehachse R beweglich ist der Träger 23 angeordnet, der einen oder mehrere Pins aufweist, die in die Mitnahmeausnehmungen des Umlaufrads 22 greifen und eine Rotationsbewegung auf den Träger übertragen können. Der Träger 23 ist über eine Welle 27 drehbar an dem Gehäuse 10, bevorzugt an dem zweiten Gehäuseteil 15, abgestützt.

Analog zu dem ersten Ausführungsbeispiel ist auf dem Träger 23 der Exzenter 25 angeordnet und fest mit diesem verbunden. Der Träger 23 weist - wie im Detail Figur 9 zu entnehmen ist - keine rotationssymmetrische Form um die Drehachse R auf. Die Form des Trägers 23 kann als birnenförmig beschrieben werden und umfasst einen ovalförmigen Bauchabschnitt und einen quaderähnlichen Halsabschnitt. Der Halsabschnitt bildet in beide Umlaufrichtungen um die Drehachse R die Anschlagsfläche 28a, 28b aus, die mit den Endanschlägen 18, 19 zusammenwirken können.

### Bezugszeichenliste

- 1: Bremsengetriebe
- 2: Sperraktor
- 5: Antriebseinrichtung
- 10: Gehäuse
- 12: Führung
- 13: Ausnehmung
- 14: Gehäuseteil
- 15: Gehäuseteil
- 18: Endanschlag
- 19: Endanschlag
- 20: Getriebe
- 21: Antriebsrad
- 22: Umlaufrad
- 23: Träger
- 25: Exzenter
- 26: Hohlrad
- 27: Welle
- 30: Klinkenschlitten
- 31: Sperrklinke
- 35: Führungsausnehmung
- 36: Kulisse
- 37: Vorsprung
- 38: Endlagenabschnitt
- 40: Federmittel
- 42: Federschuh
- 50: Klinkenrad

- L: Achse
- R: Drehachse

## Patentansprüche

1. Sperraktor (2) für ein Bremsengetriebe (1), insbesondere für ein Bremsengetriebe (1) einer elektrischen Park- und/oder Betriebsbremse, aufweisend
- eine Antriebseinrichtung (5),
- ein Gehäuse (10),
- ein Getriebe (20) mit einer Drehachse (R) und einem Abtrieb, der durch einen Träger (23) und eine Welle (27) gebildet ist, und
- einen Klinkenschlitten (30), der in einer Achse (L) zwischen einer ersten Stellung und einer zweiten Stellung entlang eines Sperrweges beweglich ist,
- **dadurch gekennzeichnet, dass** der Abtrieb über einen Exzenter (25) mit dem Klinkenschlitten (30) gekoppelt ist und bei einer Drehung des Abtriebs den Klinkenschlitten (30) in der Achse (L) bewegen kann.

2. Sperraktor (2) nach Anspruch 1, **dadurch gekennzeichnet, dass** der Exzenter (25) in eine Führungsausnehmung (35) des Klinkenschlittens (30) greift.

3. Sperraktor (2) nach einem der Ansprüche 1 oder 2, **dadurch gekennzeichnet, dass** der Exzenter (25) innerhalb der Führungsausnehmung (35) in der Ebene senkrecht zur Drehachse (R) in der Führungsausnehmung (35) beweglich ist.

4. Sperraktor (2) nach einem der vorgenannten Ansprüche, **dadurch gekennzeichnet, dass** die Führungsausnehmung (35) in der Achse (L) derart bemessen ist, dass eine Verschiebung des Exzenters innerhalb der Führungsausnehmung (35) innerhalb der Größenordnung des Sperrweges ermöglicht wird.

5. Sperraktor (2) nach einem der vorgenannten Ansprüche, **dadurch gekennzeichnet, dass** die Führungsausnehmung (35) eine Kulisse (36) umfasst.

6. Sperraktor (2) nach Anspruch 5, **dadurch gekennzeichnet, dass** die Kulisse (36) einen Vorsprung (37) aufweist, durch den der Klinkenschlitten (30) entlang des Sperrweges zwischen der ersten Stellung und der zweiten Stellung zunächst in die entgegengesetzte Richtung bewegt wird.

7. Sperraktor (2) nach einem der vorgenannten Ansprüche, **dadurch gekennzeichnet, dass** der Klinkenschlitten (30) in die zweite Stellung durch Federmittel (40) vorgespannt ist.

8. Sperraktor (2) nach einem der vorgenannten Ansprüche, **dadurch gekennzeichnet, dass** das Getriebe (20) ein Planetengetriebe oder ein Zykloidgetriebe mit jeweils einem Hohlrad (26) ist.

9. Sperraktor (2) nach einem der vorgenannten Ansprüche, **dadurch gekennzeichnet, dass** das Getriebe (20) ein Antriebsrad (21) und mindestens ein Umlaufrad (22) aufweist, das über einen um die Drehachse (R) drehbaren Träger (23) mit dem Abtrieb gekoppelt ist.

10. Sperraktor (2) nach einem der vorgenannten Ansprüche, **dadurch gekennzeichnet, dass** das Hohlrad (26) in dem Gehäuse (10) feststehend angeordnet ist, und dass die Antriebseinrichtung (5) das Antriebsrad (21) antreibt.

11. Sperraktor (2) nach einem der vorgenannten Ansprüche, **dadurch gekennzeichnet, dass** der Abtrieb den Klinkenschlitten (30) durchgreift.

12. Sperraktor (2) nach einem der vorgenannten Ansprüche, **dadurch gekennzeichnet, dass** der Klinkenschlitten (30) durch eine Führung (12) in der Achse (L) senkrecht zu der Drehachse (R) beweglich gehalten ist.

13. Sperraktor (2) nach einem der vorgenannten Ansprüche, **dadurch gekennzeichnet, dass** die Führung (12) des Klinkenschlittens (30) durch eine Ausnehmung (13) in dem Gehäuse (10) ausgebildet ist.

14. Sperraktor (2) nach Anspruch 13, **dadurch gekennzeichnet, dass** das Gehäuse (10) zwei Gehäuseteile (14, 15) aufweist, welche den Klinkenschlitten (30) in der Ausnehmung (13) formschlüssig halten, und dass das zweite Gehäuseteil (15) den Abtrieb in der Drehachse (R) gelagert hält.

15. Sperraktor (2) nach einem der vorgenannten Ansprüche, **dadurch gekennzeichnet, dass** zwei Endanschläge (18, 19) vorgesehen sind, durch die eine Drehung des Abtriebs oder des Exzenters (25) um die Drehachse (R) beschränkt ist.

16. Sperraktor (2) nach einem der vorgenannten Ansprüche, **dadurch gekennzeichnet, dass** ein Sensor vorgesehen ist, der die Stellung des Klinkenschlittens (30), des Abtriebs und/oder des Exzenters (25) erfassen kann.

17. Sperraktor (2) nach einem der vorgenannten Ansprüche, **dadurch gekennzeichnet, dass** die Antriebseinrichtung (5) einen DC-Motor umfasst.

18. Bremsengetriebe (1) mit einem Sperraktor (2) nach einem der vorgenannten Ansprüche und einem in einer Getriebeachse drehbaren Klinkenrad (50).

19. Betriebs- und/oder Parkbremse, insbesondere Betriebsbremse und/oder Parkbremse eines Kraftfahrzeugs, mit einem Bremsengetriebe (1) nach Anspruch 18.

## Claims

1. Locking actuator (2) for a brake transmission (1) of an electric parking and/or service brake, comprising
- a drive mechanism (5),
- a housing (10),
- a transmission (20) with an axis of rotation (R) and with an output unit which is formed by a support (23) and a shaft (27), and
- a latch carriage (30), which is moveable in an axis (L) along a locking path between a first position and a second position,
**characterized in that**
the output unit is coupled to the latch carriage (30) via an eccentric (25) and **in that**, when the output unit is rotated, the latch carriage (30) can move in the axis (L).

2. Locking actuator (2) in accordance with claim 1,
**characterized in that**
the eccentric (25) engages with a guide recess (35) of the latch carriage (30).

3. Locking actuator (2) in accordance with claim 1 or 2,
**characterized in that**
the eccentric (25) in the guide recess (35) is moveable within the guide recess (35) in the plane vertical to the axis of rotation (R).

4. Locking actuator (2) in accordance with any of the preceding claims,
**characterized in that**
the guide recess (35) is moveable in the axis (L) such that a shifting of the eccentric is made possible within the guide recess (35), within the dimensions of the locking path.

5. Locking actuator (2) in accordance with any of the preceding claims,
**characterized in that**
the guide recess (35) comprises a motion link (36).

6. Locking actuator (2) in accordance with claim 5,
**characterized in that**
the motion link (36) comprises a projection (37), by means of which the latch carriage (30) is first moved in the opposite direction along the locking path between the first position and the second position.

7. Locking actuator (2) in accordance with any of the preceding claims,
**characterized in that**
the latch carriage (30) is biased in the second position by means of springs (40).

8. Locking actuator (2) in accordance with any of the preceding claims,
**characterized in that**
the transmission (20) is a planetary gear or a cycloidal drive, each of which has one ring gear (26).

9. Locking actuator (2) in accordance with any of the preceding claims,
**characterized in that**
the transmission comprises a drive gear (21), and at least one epicyclic gear (22) which is coupled to the output unit via a support (23) which is rotatable around the axis of rotation (R).

10. Locking actuator (2) in accordance with any of the preceding claims,
**characterized in that** the ring gear (26) is rigidly arranged in the housing (10), and **in that** the drive mechanism (5) drives the drive gear (21).

11. Locking actuator (2) in accordance with any of the preceding claims,
**characterized in that** the output unit reaches through the latch carriage (30).

12. Locking actuator (2) in accordance with any of the preceding claims,
**characterized in that**
the latch carriage (30) is moveably held in the axis (L) vertical to the axis of rotation (R) by a guide (12).

13. Locking actuator (2) in accordance with any of the preceding claims,
**characterized in that**
the guide (12) of the latch carriage (30) is implemented by a recess (13) in the housing (10).

14. Locking actuator (2) in accordance with claim 13,
**characterized in that**
the housing (10) comprises two housing parts (14, 15) which positively hold the latch carriage (30) in the recess (13), and **in that** the second housing part (15) holds the output unit mounted in the axis of rotation (R).

15. Locking actuator (2) in accordance with any of the preceding claims,
**characterized in that**
two end stops (18, 19) are provided, by means of which a rotation of the output unit or of the eccentric (25) around the axis of rotation (R) is limited.

16. Locking actuator (2) in accordance with any of the preceding claims,
**characterized in that** a sensor is provided which can detect the position of the latch carriage (30), the output unit, and/or the eccentric (25).

17. Locking actuator (2) in accordance with any of the preceding claims,
**characterized in that**
the drive mechanism (5) comprises a DC motor.

18. Brake transmission (1) having a locking actuator (2) in accordance with any of the preceding claims and a ratchet wheel (50) which is rotatable in a gear axis.

19. Service and/or parking brake, in particular a service brake and/or a parking brake of a motor vehicle, with a brake transmission (1) in accordance with claim 18.

## Revendications

1. Actionneur de blocage (2) pour une transmission de frein (1) notamment pour une transmission de frein (1) d'un frein électrique de stationnement et/ou de service comprenant :
- une installation d'entraînement (5),
- un boîtier (10),
- une transmission (20) avec un axe de rotation (R) et une sortie formée par un support (23) et un axe (27), et
- un chariot à cliquet (30) mobile selon un axe (L) entre une première position et une seconde position le long d'une course de blocage, actionneur **caractérisé en ce que**
la sortie est couplée par un excentrique (25) au chariot à cliquet (30) et la rotation de la sortie, déplace le chariot à cliquet (30) selon l'axe (L).

2. Actionneur de blocage (2) selon la revendication 1,
**caractérisé en ce que**
l'excentrique (25) est en prise dans un évidement de guidage (35) du chariot à cliquet (30).

3. Actionneur de blocage (2) selon l'une des revendications 1 ou 2,
**caractérisé en ce que**
l'excentrique (25) est mobile dans l'évidement de guidage (35) dans un plan perpendiculaire à l'axe de rotation (R).

4. Actionneur de blocage (2) selon l'une des revendications précédentes, **caractérisé en ce que**
l'évidement de guidage (35) est dimensionné selon l'axe (L) pour permettre un coulissement de l'excentrique à l'intérieur de l'évidement de guidage (35) en correspondance avec la course de blocage.

5. Actionneur de blocage (2) selon l'une des revendications précédentes, **caractérisé en ce que**
l'évidement de guidage (35) comprend une coulisse (36).

6. Actionneur de blocage (2) selon la revendication 5,
**caractérisé en ce que**
la coulisse (36) comporte un relief (37) par lequel le chariot à cliquet (30) se déplace le long de la course de blocage entre une première position et une seconde position, tout d'abord dans la direction opposée.

7. Actionneur de blocage (2) selon l'une des revendications précédentes, **caractérisé en ce que**
le chariot à cliquet (30) est précontraint par ressort (40) dans la seconde position.

8. Actionneur de blocage (2) selon l'une des revendications précédentes, **caractérisé en ce que**
la transmission (20) est une transmission planétaire ou une transmission à cycloïde avec une roue creuse (26).

9. Actionneur de blocage (2) selon l'une des revendications précédentes, **caractérisé en ce que**
la transmission (20) comprend une roue d'entraînement (21) et au moins une roue de circulation (22) couplée à la sortie par un support (23) tournant autour de l'axe de rotation (R).

10. Actionneur de blocage (2) selon l'une des revendications précédentes,
**caractérisé en ce que**
la roue creuse (26) est installée de manière fixe dans le boîtier (10) et l'installation d'entraînement (5) entraîne la roue d'entraînement (21).

11. Actionneur de blocage (2) selon l'une des revendications précédentes,
**caractérisé en ce que**
la sortie traverse le chariot à cliquet (30).

12. Actionneur de blocage (2) selon l'une des revendications précédentes,
**caractérisé en ce que**
le chariot à cliquet (30) est maintenu mobile selon l'axe (L) perpendiculaire à l'axe de rotation (R) dans un guide (12).

13. Actionneur de blocage (2) selon l'une des revendications précédentes,
**caractérisé en ce que**
le guide (12) du chariot à cliquet (30) est réalisé par un évidement (13) du boîtier (10).

14. Actionneur de blocage (2) selon la revendication 13,
**caractérisé en ce que**
le boîtier (10) comporte deux parties de boîtier (14, 15) qui tiennent le chariot à cliquet (30) dans l'évidement (13) par une liaison par la forme, et la seconde partie de boîtier (15) tient la sortie dans l'axe de rotation (R).

15. Actionneur de blocage (2) selon l'une des revendications précédentes,
**caractérisé en ce que**
il comporte deux butées d'extrémité (18, 19) qui limitent la rotation de la sortie ou de l'excentrique (25) autour de l'axe de rotation (R).

16. Actionneur de blocage (2) selon l'une des revendications précédentes,
**caractérisé en ce que**
il est prévu un capteur qui saisit la position du chariot à cliquet (30), de la sortie et/ou de l'excentrique (25).

17. Actionneur de blocage (2) selon l'une des revendications précédentes,
**caractérisé en ce que**
l'installation d'entraînement (5) est un moteur à courant continu.

18. Transmission de frein (1) comprenant un actionneur de blocage (2) selon l'une des revendications précédentes et une roue à cliquet (50) tournant autour de l'axe de transmission.

19. Frein de service et/ou de stationnement notamment frein de service et/ou frein de stationnement d'un véhicule automobile comprenant une transmission de frein (1) selon la revendication 18.
